# EUROPÄISCHE PATENTSCHRIFT

(11) **EP 2 678 223 B1**
(45) Veröffentlichungstag und Bekanntmachung des Hinweises auf die Patenterteilung: **22.07.2015**
(21) Anmeldenummer: 12701227.6
(22) Anmeldetag: 25.01.2012
(51) Int. Cl.: B64D 11/04

(54) **MODULARE BORDKÜCHE, INSBESONDERE FLUGZEUGBORDKÜCHE, UND VERFAHREN ZUR MONTAGE**
MODULAR ON-BOARD GALLEY, IN PARTICULAR AIRCRAFT GALLEY, AND METHOD FOR ASSEMBLY
CUISINE DE BORD MODULAIRE, EN PARTICULIER CUISINE DE BORD D'UN AÉRONEF, ET PROCÉDÉ DE MONTAGE DE LADITE CUISINE

(30) Priorität: 22.02.2011 DE 102011011961
(43) Veröffentlichungstag der Anmeldung: 01.01.2014
(73) Patentinhaber: Sell Gmbh, 35745 Herborn (DE)
(72) Erfinder: SÄLTZER, Steffen, 35756 Mittenaar (DE); CLAAS, Andreas, 35745 Herbornseelbach (DE)
(74) Vertreter: Grosse, Wolf-Dietrich Rüdiger
(86) Internationale Anmeldenummer: PCT/EP2012/000314
(87) Internationale Veröffentlichungsnummer: WO 2012/113499

(56) Entgegenhaltungen:
- WO-A1-2004/071867
- DE-A1-102006 023 047
- US-A1- 2007 228 216

## Beschreibung

Die Erfindung betrifft eine modulare Bordküche, insbesondere Flugzeugbordküche, die als Nutzbereiche ein Grundelement und mindestens ein Aufbauelement, unterteilt in Fächer zur Aufnahme von Einschüben und Geräten, umfasst, die mit mechanischen Anschlüssen zur Verbindung der Elemente und mit Einbauten oder Geräten sowie elektrischen und elektronischen Geräte-Anschlussmitteln und Geräteversorgungsleitungen ausgebildet sind. Desweiteren betrifft die Erfindung ein Verfahren zur Montage einer modularen Bordküche.

Eine solche modulare Bordküche ist durch die DE 10 2006 023 047 A1 bekannt geworden. Sie setzt sich aus mehreren vertikalen sowie horizontalen Strukturelementen und durch diese gebildeten Nutzbereichen zur Aufnahme von Einschüben, Einbauten oder Geräten zusammen. Erste Strukturelemente bilden ein Grundelement mit Anschlusselementen zum mechanischen Anschluss von zweiten Strukturelementen, Anbauten, Einbauten, Geräten und/oder Einschüben, die variabel sind, und an dem Schnittstellen zur Versorgung von in der Bordküche unterzubringenden Geräten vorgesehen sind.

Die so geschaffenen Nutzbereiche sind an zwei einander gegenüber liegenden Seiten geschlossen und zur Aufnahme von Einschüben, Geräten oder Einbauten von der Frontseite her zugänglich bzw. bedienbar. Auf dem ersten Strukturelement bzw. Grundelement befindet sich ein in Fächer unter- bzw. aufteilbares Aufbauelement. Die integrierten Anschlusselemente dienen zum mechanischen Anschluss von Einbauten oder Geräten und die Schnittstellen zur Versorgung von Geräten mit Elektrizität oder Wasser oder zur Übertragung von Daten und Informationen oder für eine andersartige Ver- oder Entsorgung.

Diese bekannte Bordküche ermöglicht zwar einen variablen Aufbau und eine Austauschbarkeit der Anbauten, Einbauten, Geräte und/oder Einschübe gegeneinander, nimmt für diese Variabilität jedoch in Kauf, dass eine außerordentlich große Anzahl von vertikalen und horizontalen Strukturelementen erforderlich ist.

Der Erfindung liegt daher die Aufgabe zugrunde, eine modulare Bordküche der eingangs genannten Art zu schaffen, die nicht nur einen variablen Aufbaut bietet, sondern in einfacher Weise mit vormontierten, in ihren Abmessungen gleichwohl kompakten, raumsparenden block- bzw. gehäuseartigen An- und Aufbauten eine Komplettmontage der Küche ermöglicht, insbesondere in einem voll mit Sitzen, Schränken und Bordtoiletten ausgestatteten Flugzeug, ohne diese eingebauten Teile vorher ausbauen zu müssen. Weiterhin liegt der Erfindung die Aufgabe zugrunde, ein Verfahren zur Montage einer modularen Bordküche zu schaffen.

Diese Aufgabe wird erfindungsgemäß dadurch gelöst, dass ein von der Küchenbedienseite her gesehen rückwärtig angeordnetes Zentralelement zur seitlichen sowie nach vorne und hinten vorspringenden Umbauung und hochragenden Überbauung mit sukzessive anzubauenden einzelnen gehäuseartigen Nutzanbauten ausgebildet ist, wobei das Zentralelement eine Horizontalebenen-Trennstelle und sowohl in Längs- als auch in Querrichtung verlaufende VertikalebenenTrennstellen aufweist. Das Zentralelement, das vorzugsweise eine von einer Rückwand ausgehend nach vorne, zur Küchenbedienseite hin offene, U-förmige Kastenstruktur mit vertikalen Außenwänden und eine Deckenwand besitzt, erlaubt durch das Konzept mit mehreren Trennstellen eine Verbesserung der Montagefolge durch blockartige, das Zentralelement nach vorne, hinten, oben und seitlich erweiternden Ergänzungsanbauten. Deren Abmessungen können sich so festlegen lassen, dass die Bauteile zur Endmontage als Einzelteile auch durch eine im Flugzeugrumpf weiter hinten positionierte und somit entsprechend schmalere Tür ohne weiteres in das Flugzeuginnere geschafft werden können.

Eine bevorzugte Ausführung der Erfindung sieht vor, dass in der Rückwand des Zentralelementes eine Wartungsklappe ausgebildet ist. Da das Trennstellenkonzept des Zentralelementes den Um- und Überbau ohne Beeinträchtigung der Rückwand ermöglicht, die nach hinten hin frei bleibt und nicht zugebaut wird, kann das Personal notwendige Wartungsarbeiten hinter der Bordküche durchführen, ohne diese verschieben zu müssen.

Nach einer vorteilhaften Ausgestaltung der Erfindung sind am oberen Ende der Rückwand in Flucht mit der Deckenwand verlaufend nach hinten vorragende Stützstreben vorgesehen. Auf diese können somit die blockartigen Aufbauten aufgesetzt werden, die das Zentralelement nach hinten und oben erweitern, ohne dabei die Rückwand zu versperren.

Ein anderer Vorschlag sieht vor, dass erfindungsgemäß ein nach vorne an das Zentralelement mit Abstützung auf dem Fußboden durch seitliche Begrenzungswände angesetzter Nutzunteranbau durch vertikale Trennwände unterteilt ist. In die somit einzelnen Fächer des Nutzunteranbaus können Einschübe oder dergleichen mit Rollen auf dem Fußboden laufend beliebig eingebracht werden.

Ein Verfahren zur Montage einer modularen Bordküche nach der Erfindung sieht vor, dass das Zentralelement sukzessive wie folgt um- und überbaut werden kann:
- Ansetzen eines Nutzunteranbaus an die Vertikalebenen-Trennstelle in Längsrichtung des Zentralelementes und Verbinden des Nutzunteranbaus mit dem Zentralelement, wobei der Nutzunteranbau mit einer oberen Abschlussplatte bündig an die Vorderkante der Deckenwand des Zentralelementes anschließt und mit das Zentralelement in Längsrichtung beidseitig überkragenden, oben von der Abschlussplatte überdeckten Fachanbauten ausgebildet ist,
- Aufsetzen eines Hochfachnutzanbaus auf die HorizontalebenenTrennstelle des Zentralelementes mit Auflage auf dessen Stützstreben und Verbinden des Hochfachnutzanbaus mit dem Zentralelement,
- Aufsetzen eines ersten und eines zweiten, dem Hochfachnutzanbau zur Küchenbedienseite hin vorgelagerten, jeweils an einer Außenseite mit die überkragenden Fachanbauten nach oben ergänzenden Seitenfachanbauten ausgebildeten Hochfachvorbaus auf die Abschlussplatte und Verbinden mit der Abschlussplatte,
- Einfassen der Um- und Überbauten an der Küchenbedienseite mit einem deren Konturverlauf angepassten Blendrahmen.

Damit lässt sich eine völlig autonome Montage sowie Wartung und auch Umrüstung der modularen Bordküche erreichen, ohne dass Flugzeugausstattungen wie Sitze, Bordtoiletten oder Schränke zur Schaffung freier Bauräume zuvor ausgebaut werden müssen.

Es versteht sich, dass in die fertig montierte, mit allen erforderlichen Anschlüssen ausgerüstete Bordküche dann die Einschübe, Geräte oder dergleichen integriert werden.

Weitere Merkmale und Einzelheiten der Erfindung ergeben sich aus den Ansprüchen und der nachfolgenden Beschreibung eines in den Zeichnungen dargestellten Ausführungsbeispiels der Erfindung. Es zeigen:
- Fig. 1: als Einzelheit einer modularen Flugzeugbordküche in einer perspektivischen Gesamtansicht ein eine U-förmige Kastenstruktur besitzendes Zentralelement, von der nach vorne, zur Bedien- bzw. Frontseite der Küche hin offenen Seite gesehen;
- Fig. 2: in einer perspektivischen Gesamtansicht das Zentralelement der Fig. 1 mit nach vorne montiertem Nutzunteranbau;
- Fig. 3: in einer perspektivischen Gesamtansicht die durch einen Hochfachnutzanbau ergänzten Bauteile der Fig. 2;
- Fig. 4: in einer perspektivischen Gesamtansicht die durch einen Hochfachvorbau mit Seitenfachanbau ergänzten Bauteile der Fig. 3;
- Fig. 5: in einer perspektivischen Gesamtansicht die durch einen weiteren Hochfachvorbau mit Seitenfachanbau ergänzten Bauteile der Fig. 4;
- Fig. 6: in einer perspektivischen Gesamtansicht die Bauteile der Fig. 5 mit Unterteilung des Nutzunteranbaus durch vertikale Trennwände: und
- Fig. 7: in einer perspektivischen Gesamtansicht die vorne durch einen Blendrahmen komplettierten Bauteile der Fig. 6.

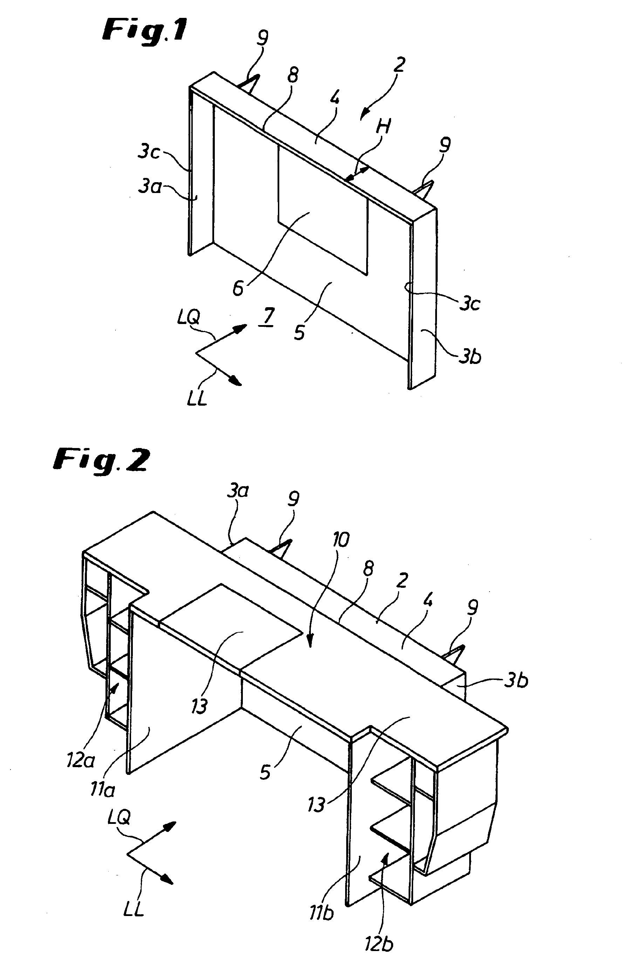

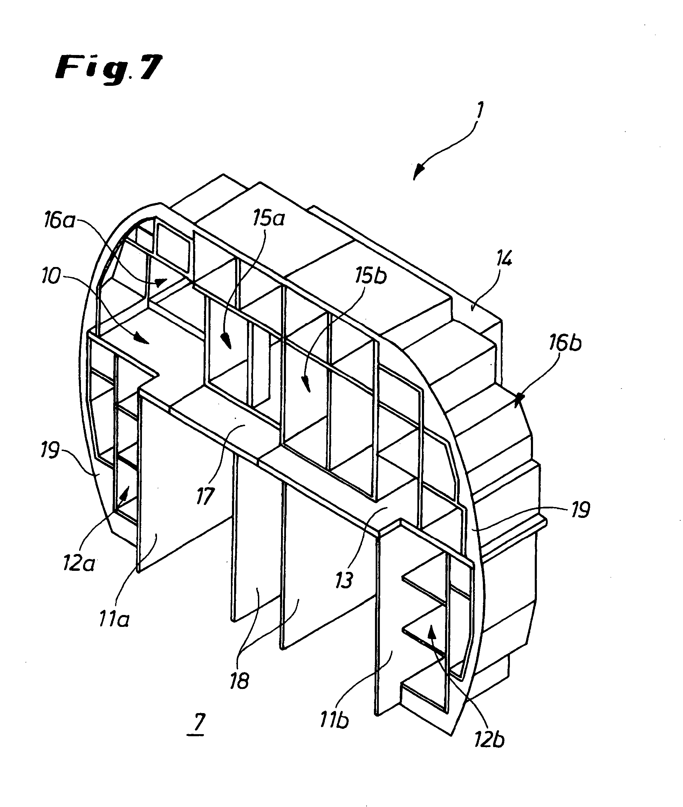

Eine in Fig. 7 als Gesamtheit nach der Fertigmontage ohne Einschübe, Geräte oder dergleichen dargestellte modulare Flugzeugbordküche 1 beruht als Ausgangsbauteil auf einem eine U-förmige Kastenstruktur aufweisenden, in Fig. 1 dargestellten Zentralelement 2. Dieses besitzt vertikale Außen- bzw. Begrenzungswände 3a, 3b, eine Deckenwand 4 sowie eine Rückwand 5 mit darin ausgebildeter Wartungsklappe 6, wobei das Zentralelement 2 nach vorne, zur Küchenbedienseite 7 (vgl. Fig. 7) hin offen ist und sich mit seinen Außenwänden 3a, 3b und der Rückwand 5 auf dem Fußboden abstützt.

Zur Umbauung und hochragenden Überbauung mit einzelnen block- bzw. gehäuseartigen seitlichen sowie nach vorne und hinten vorspringenden, nachfolgend noch erläuterten Nutzanbauten, stellt das Zentralelement 2 durch die Oberfläche der Deckenwand 4 in Richtung des skizzierten Doppelpfeils eine Horizontalebenen-Trennstelle H und mit den außenliegenden Oberflächen der Außenwände 3a, 3b sowie einerseits der Vorderkante 8 der Trennwand 4 und andererseits den Vorderkanten 3 c der Außenwände 3a, 3b gemäß den skizzierten Pfeilen sowohl in seiner Längsrichtung als auch Querrichtung verlaufende VertikalebenenTrennstellen LL bzw. LQ bereit. Zur nach hinten orientierten Überbauung weist das Zentralelement 2 außerdem am oberen Ende der Rückwand 5 in Flucht mit der Deckenwand 4 verlaufend nach hinten vorragende Stützstreben 9 auf.

Der Fig. 2 ist ein an das nach vorne, zur Küchenbedienseite 7 hin offene Ende an die in Längsrichtung des Zentralelementes 2 verlaufende VertikalebenenTrennstelle LL angesetzter, durch nicht näher gezeigte Anschlussmittel mit dem Zentralelement 2 verbundener Nutzunteranbau 10 zu entnehmen. Dieser besteht hier aus zwei äußeren Begrenzungswänden 11 a, 11 b und seitlich ausladenden, in Längsrichtung das Zentralelement 2 überkragenden Fachanbauten 12a, 12b und einer kopfseitigen, die Begrenzungswände 11a, 11b mit Überdeckung gleichzeitig der Fachanbauten 12a, 12b überbrückenden, bündig an die Vorderkante 8 der Deckenwand 4 des Zentralelementes 2 anschließenden Abschlussplatte 13.

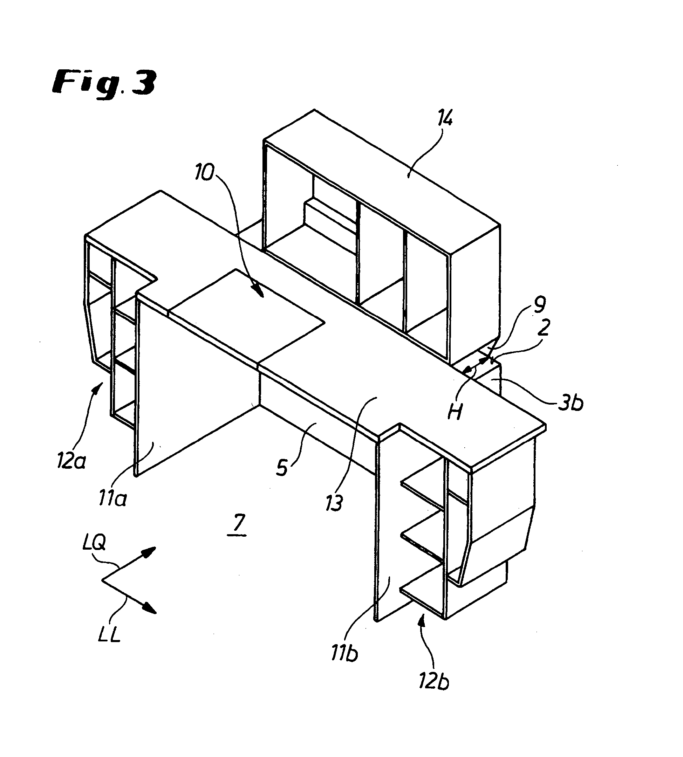

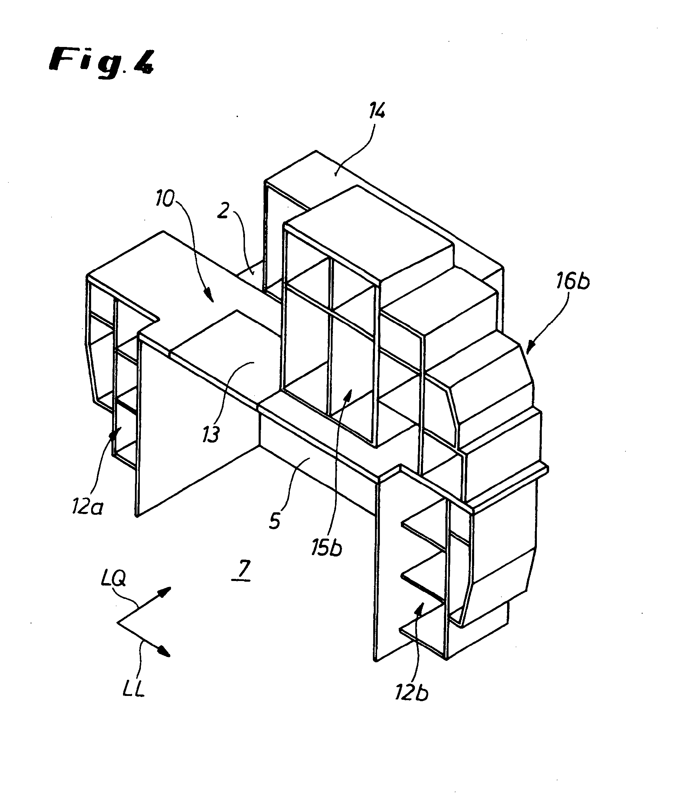

Nach Fig. 3 ist die Baugruppe der Fig. 2 durch ein auf die HorizontalebenenTrennstelle H bzw. Deckenwand 4 des Zentralelementes 2 mit Auflage auf dessen Stützstreben 9 aufgesetzten Hochfachnutzanbau 14 ergänzt worden, der wie das Zentralelement 2 in Längsrichtung und in Querrichtung verlaufende Vertikalebenen-Trennstellen LL und LQ bereitstellt. Von diesen wird die in Längsrichtung verlaufende Vertikalebenen-Trennstelle LL genutzt, um auf die Abschlussplatte 13 des Nutzunteranbaus 10 einen ersten Hochfachvorbau 15b (Fig. 4) und einen zweiten Hochfachvorbau 15a aufzusetzen und dem Hochfachnutzanbau 14 vorgelagert über die Abschlussplatte 13 mit dem Nutzunterbau 10 zu verbinden. Die optional auch einstückig auszubildenden Hochfachvorbauten 15a, 15b sind mit Seitenfachanbauten 16a, 16b verbunden bzw. versehen, die sich auf den Fachanbauten 12a, 12b des Nutzunteranbaus 10 nach oben erstrecken und an der Abschlussplatte 13 und/oder den zugehörigen Hochfachvorbauten 15a bzw. 15b befestigt sind.

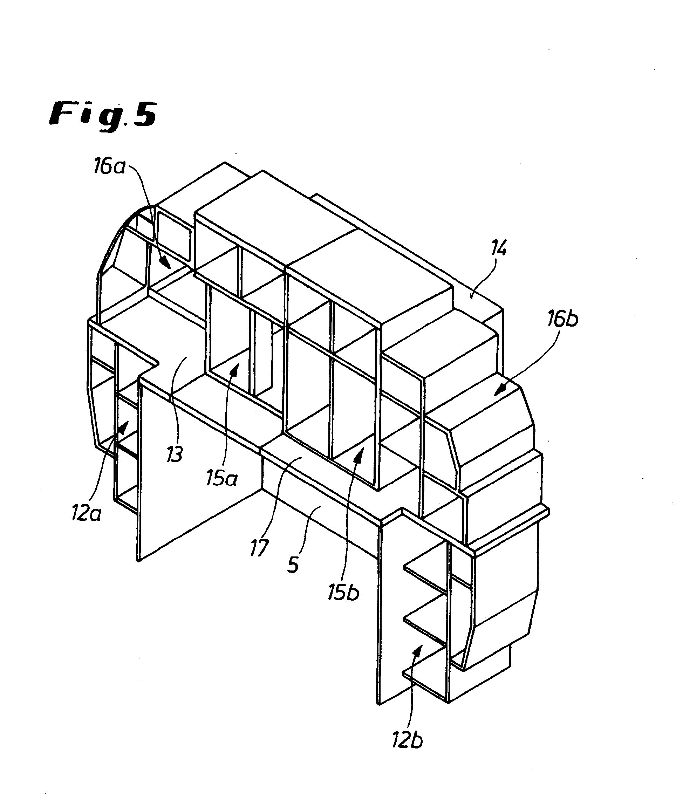

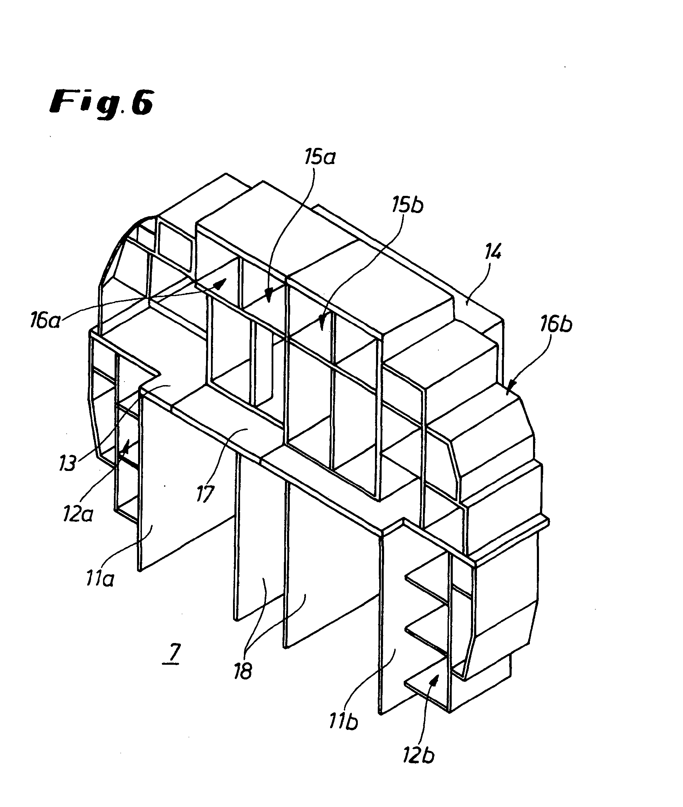

Wie in den Fig. 5 und 6 gezeigt, kann auf die Abschlussplatte 13 des Nutzunteranbaus 10 eine Arbeitsplatte 17 vorgesehen werden, die sich hier von den Unterkanten der Hochfachvorbauten 15a, 15b zur Küchenbedienseite 7 hin erstreckt. Der Fig. 6 ist weiterhin zu entnehmen, dass sich der Nutzunteranbau 10 durch vertikale Trennwände 18 in Fächer für nicht dargestellte Einschübe unterteilen lässt. Die somit aus einzelnen, block- bzw. gehäuseartigen, auch bei beengten Raumverhältnissen gut zu handhabenden Bauteilen ausgehend von dem Zentralelement und dessen Trennstellen durch Um- und Überbauung modular zusammengesetzte Bordküche 1 ist gemäß Fig. 7 an der Küchenbedienseite 7 mit einem dem Konturverlauf der Um- und Überbauten angepassten Blendrahmen 19 eingefasst.

### Bezugszeichenliste:

- 1: Bordküche/Flugzeugbordküche
- 2: Zentralelement
- 3a, b: Außen-/Endwand
- 3c: Vorderkante
- 4: Deckenwand
- 5: Rückwand
- 6: Wartungsklappe
- 7: Küchenbedienseite
- 8: Vorderkante
- 9: Stützstrebe
- 10: Nutzunteranbau
- 11a, b: Begrenzungswand
- 12a, b: Fachanbau
- 13: Abschlussplatte
- 14: Hochfachnutzanbau
- 15a,: erster Hochfachvorbau
- 15b: zweiter Hochfachvorbau
- 16a, b: Seitenfachanbauten
- 17: Arbeitsplatte
- 18: Trennwand
- 19: Blendrahmen

- H: Horizontalebenen-Trennstelle
- LL: Vertikalebenen-Trennstelle (in Längsrichtung)
- LQ: Vertikalebenen-Trennstelle (in Querrichtung)

## Patentansprüche

1. Modulare Bordküche, insbesondere Flugzeugbordküche (1), die als Nutzbereiche ein Grundelement und mindestens ein Aufbauelement, unterteilt in Fächer zur Aufnahme von Einschüben und Geräten, umfasst, die mit mechanischen Anschlüssen zur Verbindung der Elemente und mit Einbauten oder Geräten sowie elektrischen und elektronischen Geräte-Anschlussmitteln und Geräteversorgungsleitungen ausgebildet sind,
**dadurch gekennzeichnet,**
**dass** ein von der Küchenbedienseite (7) her gesehen rückwärtig angeordnetes Zentralelement (2) zur seitlichen sowie nach vorne und hinten vorspringenden Umbauung und hochragenden Überbauung mit sukzessive anzubauenden einzelnen gehäuseartigen Nutzanbauten ausgebildet ist, wobei das Zentralelement (2) eine Horizontalebenen-Trennstelle (H) und sowohl in Längs- als auch in Querrichtung verlaufende Vertikalebenen-Trennstellen (LL, LQ) aufweist.

2. Bordküche nach Anspruch 1,
**dadurch gekennzeichnet,**
**dass** das Zentralelement (2) eine von einer Rückwand (5) ausgehend nach vorne offene, U-förmige Kastenstruktur mit vertikalen Außenwänden (3a, 3b) und eine Deckenwand (4) besitzt.

3. Bordküche nach Anspruch 2,
**dadurch gekennzeichnet,**
**dass** in der Rückwand (5) eine Wartungsklappe (6) ausgebildet ist.

4. Bordküche nach Anspruch 2 oder 3,
**gekennzeichnet durch**
am oberen Ende der Rückwand (5) in Flucht mit der Deckenwand (4) verlaufend nach hinten vorkragende Stützstreben (9).

5. Bordküche nach einem der Ansprüche 1 bis 4,
**dadurch gekennzeichnet,**
**dass** ein mit Abstützung auf dem Fußboden durch seitliche Begrenzungswände (11 a, 11 b) nach vorne an das Zentralelement (2) angesetzter Nutzunteranbau (10) durch vertikale Trennwände (18) unterteilt ist.

6. Verfahren zur Montage einer modularen Bordküche, insbesondere Flugzeugbordküche, nach einem der Ansprüche 1 bis 5, die als Nutzbereiche ein Grundelement und ein Aufbauelement, unterteilt in Fächer zur Aufnahme von Einschüben und Geräten, umfasst, die mit mechanischen Anschlüssen zur Verbindung der Elemente und Einbauten oder Geräten sowie elektrischen und elektronischen Geräte-Anschlussmitteln und Gerätversorgungsleitungen ausgebildet sind,
**dadurch gekennzeichnet,**
**dass** das Zentralelement (2) sukzessive wie folgt um- und überbaut werden kann:
- Ansetzen eines Nutzunteranbaus (10) an die Vertikalebenen-Trennstelle (LL) in Längsrichtung des Zentralelementes (2) und Verbinden des Nutzunteranbaus (10) mit dem Zentralelement (2), wobei der Nutzunteranbau (10) mit einer oberen Abschlussplatte (13) bündig an die Vorderkante (8) der Deckenwand (4) des Zentralelementes (10) anschließt und mit das Zentralelement (2) in Längsrichtung beidseitig überkragenden, oben von der Abschlussplatte (13) überdeckten Fachanbauten (12a, 12b) ausgebildet ist,
- Aufsetzen eines Hochfachnutzanbaus (14) auf die Horizontalebenen-Trennstelle (H) des Zentralelementes (2) mit Auflage auf dessen Stützstreben (9) und Verbinden des Hochfachnutzanbaus (14) mit dem Zentralelement,
- Aufsetzen eines ersten und eines zweiten, dem Hochfachnutzanbau (14) zur Küchenbedienseite (7) hin vorgelagerten, jeweils an einer Außenseite mit die überkragenden Fachanbauten (12a, 12b) nach oben ergänzenden Seitenfachanbauten (16a, 16b) ausgebildeten Hochfachvorbaus (15a, 15b) auf die Abschlussplatte (13) und Verbinden mit der Abschlussplatte (13),
- Einfassen der Um- und Überbauten an der Küchenbedienseite (7) mit einem deren Konturverlauf angepassten Blendrahmen (19).

## Claims

1. A modular galley, in particular aircraft galley (1), comprising as utility regions a base element and at least one add-on element, divided into compartments for receiving inserts and devices, wherein the aforesaid comprise mechanical connections for connecting the elements, and comprising built-in fittings or devices as well as electrical and electronic device connection means and device supply lines,
**characterised in that**
a central element (2), which is arranged rearwards when viewed from the galley operator side (7), for lateral as well as forwards and rearwards projecting enclosure and high superstructure comprises individual housing-like utility add-ons that are to be added on gradually, wherein the central element (2) comprises a horizontal-plane joint (H) and vertical plane joints (LL, LQ) that extend both in the longitudinal direction and in the transverse direction.

2. The galley according to claim 1,
**characterised in that**
the central element (2) comprises a U-shaped box structure, which starting from a rear wall (5) towards the front is open, with vertical exterior walls (3a, 3b) and a ceiling wall (4).

3. The galley according to claim 2,
**characterised in that**
in the rear wall (5) there is a maintenance flap (6).

4. The galley according to claim 2 or 3,
**characterised by**
support braces (9) that at the top end of the rear wall (5), extending in alignment with the ceiling wall (4), project towards the rear.

5. The galley according to any one of claims 1 to 4,
**characterised in that**
a lower utility add-on (10), supported on the floor by lateral delimitation walls (11a, 11b) following on forwards from the central element (2), is divided by vertical partition walls (18).

6. A method for installing a modular galley, in particular aircraft galley, according to any one of claims 1 to 5, which as utility regions comprise a base element and an add-on element, divided into compartments for receiving inserts and devices, wherein the aforesaid comprise mechanical connections for connecting the elements, and comprising built-in fittings or devices as well as electrical and electronic device connection means and device supply lines,
**characterised in that**
in terms of construction, the central element (2) can gradually be surrounded or topped as follows:
• attaching a lower utility add-on (10) to the vertical-plane joint (LL) in the longitudinal direction of the central element (2), and connecting the lower utility add-on (10) to the central element (2), wherein an upper cover plate (13) of the lower utility add-on (10) adjoins so as to be flush with the front edge (8) of the ceiling wall (4) of the central element (2), and comprises compartment add-ons (12a, 12b) that in the longitudinal direction on both sides project beyond the central element (2), which compartment add-ons (12a, 12b) are covered at the top by the cover plate (13),
• placing a high-compartment utility add-on (14) onto the horizontal-plane joint (H) of the central element (2) by resting it on its support braces (9), and connecting the high-compartment utility add-on (14) to the central element,
• placing onto the cover plate (13) and connecting to the cover plate (13) a first and a second high-compartment extension (15a, 15b), which are situated in front of the high-compartment utility add-on (14) towards the galley operator side (7), and in each case on an outside comprising lateral compartment add-ons (16a, 16b) that supplement the projecting compartment add-ons (12a, 12b) towards the top,
• framing the enclosing structures and superstructures on the galley operator side (7) with a cover frame (19) that matches their contours.

## Revendications

1. Cuisine de bord modulaire, en particulier cuisine de bord d'un avion (1) qui comprend en tant que parties utiles, un élément de fond et au moins un élément de montage, divisés en compartiments pour recevoir des tiroirs et des appareils, qui sont conçus avec des raccords mécaniques pour relier les éléments et avec des encastrements ou des appareils ainsi que des éléments de raccordement d'appareil électriques et électroniques et des lignes d'alimentation des appareils, **caractérisée en ce qu'**un élément central (2) disposé vers l'arrière vu du côté service de la cuisine (7) est conçu pour un aménagement latéral ainsi qu'en saillie vers l'avant et vers l'arrière et pour une surélévation en saillie vers le haut avec des montages utiles en forme de logements individuels successifs à monter, sachant que l'élément central (2) présente un point de séparation (H) plan horizontal ainsi que des points de séparation (LL, LQ) plans verticaux passant dans le sens longitudinal et également transversal.

2. Cuisine de bord selon la revendication 1, **caractérisée en ce que** l'élément central (2) possède une structure de caisson en U ouverte vers l'avant et partant d'une paroi arrière (5), avec des parois extérieures verticales (3a, 3b) et une paroi de plafond (4).

3. Cuisine de bord selon la revendication 2, **caractérisée en ce qu'**un volet de maintenance (6) est prévu dans la paroi arrière (5).

4. Cuisine de bord selon la revendication 2 ou 3, **caractérisée par** des montants d'appui (9) en saillie vers l'arrière et passant sur l'extrémité supérieure de la paroi arrière (5) affleurant avec la paroi de plafond (4).

5. Cuisine de bord selon l'une des revendications 1 à 4, **caractérisée en ce qu'**une sous-construction utile (10) placée en appui sur le sol par des parois de délimitation (11a, 11b) latérales, placée vers l'avant sur l'élément central (2), est divisée par des parois de séparation verticales (18).

6. Procédé de montage d'une cuisine de bord modulaire, en particulier d'une cuisine de bord d'un avion selon l'une des revendications 1 à 5, qui comprend en tant que parties utiles, un élément de fond et un élément de montage, divisés en compartiments pour recevoir des tiroirs et des appareils, qui sont conçus avec des raccords mécaniques pour relier les éléments et avec des encastrements ou des appareils ainsi que des éléments de raccordement d'appareil électriques et électroniques et des lignes d'alimentation des appareils, **caractérisée en ce que** l'élément central (2) peut être successivement transformé et superposé comme suit :
- placement d'une sous-construction utile (10) sur le point de séparation plan vertical (LL) dans le sens longitudinal de l'élément central (2) et liaison de la sous-construction utile (10) à l'élément central (2), sachant que la sous-construction utile (10) se raccorde à une plaque de fermeture supérieure (13) affleurant avec l'arête avant (8) de la paroi de plafond (4) de l'élément central (2) et est formée avec des montages de compartiments (12a, 12b) recouverts sur le haut par la plaque de fermeture (13), en saillie des deux côtés de l'élément central (2) dans le sens longitudinal,
- placement d'un montage utile de compartiments élevé (14) sur le point de séparation plan horizontal (H) de l'élément central (2) avec appui sur ses montants d'appui (9) et liaison du montage utile de compartiments élevé (14) avec l'élément central,
- placement d'un premier et d'un second montage avant de compartiments élevé (15a, 15b) sur la plaque de fermeture (13), disposés à l'avant du montage utile de compartiments élevé (14) vers le côté de service de la cuisine (7), formé respectivement sur un côté extérieur avec des montages de compartiments latéraux (16a, 16b) complétant vers le haut les montages de compartiments (12a, 12b) en saillie, et liaison avec la plaque de fermeture (13),
- intégration des transformations et surélévations sur le côté de service de la cuisine (7) avec un châssis fixe (19) adapté à leur contour.
